# EUROPÄISCHE PATENTANMELDUNG

(11) **EP 3 339 905 A1**
(43) Veröffentlichungstag der Anmeldung: **27.06.2018**
(21) Anmeldenummer: 16206275.6
(22) Anmeldetag: 22.12.2016
(51) Int. Cl.: G01S 19/33, G01S 19/39, G07B 15/06

(54) **VERFAHREN, SYSTEM, VORRICHTUNG UND COMPUTERPROGRAMMPRODUKT ZUR SIGNALISIERUNG EINER FEHLFUNKTION ODER DROHENDEN FEHLFUNKTION EINER POSITIONSBESTIMMUNGSVORRICHTUNG, SOWIE GEBÜHRENERHEBUNGSSYSTEM**

(71) Anmelder: Toll Collect GmbH, 10785 Berlin (DE)
(72) Erfinder: Böhme, Nils, 14471 Potsdam (DE); Slizewski, Zbigniew, 10829 Berlin (DE); Manojlovic, Ognjen, 10439 Berlin (DE)
(74) Vertreter: adares Patent- und Rechtsanwälte Reininger & Partner GmbB

(57) **Zusammenfassung**

Die Erfindung betrifft ein Verfahren zur Signalisierung einer Fehlfunktion oder drohenden Fehlfunktion einer Positionsbestimmungsvorrichtung (PV) sowie ein zugehöriges Signalisierungssystem, Gebührenerhebungssystem, Positionsbestimmungsvorrichtung (PV) und Computerprogrammprodukt (CP). Das Verfahren weist folgende Verfahrensschritte auf: Empfangen von mindestens zwei Erstsignalen zweier Satelliten eines ersten GNSS-Satellitensystems und Ableiten eines Erstpositionswerts aus den Erstsignalen; Empfangen von mindestens zwei Zweitsignalen zweier Satelliten eines zweiten GNSS-Satellitensystems und Ableiten eines Zweitpositionswerts aus den Zweitsignalen; Auswerten des Erstpositionswerts und/oder des Zweitpositionswerts; und Entscheiden, dass eine Signalisierung ausgelöst wird, in Abhängigkeit vom Ergebnis des Auswertens.

## Beschreibung

Die Erfindung betrifft ein Verfahren zur Signalisierung einer Fehlfunktion oder einer drohenden Fehlfunktion einer Positionsbestimmungsvorrichtung, insbesondere zur Signalisierung einer drohenden mangelnden Betriebsfähigkeit oder einer Störung beispielsweise aufgrund von Störsignalen. Ferner betrifft die Erfindung ein zugehöriges Signalisierungssystem, ein Gebührenerhebungssystem, eine Positionsbestimmungsvorrichtung und ein Computerprogrammprodukt.

Eine Positionsbestimmungsvorrichtung bildet die zentrale Komponente sowohl eines Navigationssystems, als auch eines elektronischen Mautsystems. Bei letzterem handelt es sich um ein Gebührenerhebungssystem, welches die von einem Fahrzeug benutzten Straßen oder andere Verkehrsstrukturen wie Brücken und Tunnel bzw. die durch das Fahrzeug auf diesen Strukturen zurückgelegten Strecken ermittelt und darauf basierend dem Fahrzeughalter eine entsprechende Mautrechnung zukommen lässt.

Eine satellitengestützte Positionsbestimmungsvorrichtung ermittelt Positionen eines Fahrzeuges mittels eines globalen Navigationssatellitensystems (GNSS), welches durch eine Vielzahl an Navigationssatelliten gebildet wird, die jeweils fortlaufend ein Navigationssignal, kurz Signal, aussenden. Mittels eines GNSS-Empfängers werden Signale mehrerer der Navigationssatelliten empfangen und ausgewertet, um daraus die genaue Position zu berechnen. Für die Bestimmung der Position in einer bekannten Höhe über oder auf der Erdoberfläche reichen Signale von 3 Satelliten aus. Signale von 4 Satelliten sind dann notwendig, wenn zusätzlich zur Längen- und Breitenkoordinate einer Position auch die Höhe der Position über der Erdoberfläche bestimmt werden soll. Üblicherweise sind beispielsweise beim GPS-System von jeder Position der Erde aus jederzeit etwa 6-10 Navigationssatelliten "sichtbar".

Eine in einem Fahrzeug installierte Positionsbestimmungsvorrichtung wird auch als On-Board Unit (OBU) oder als Fahrzeuggerät (FzG) bezeichnet. Aufgrund von Materialermüdung, Alterung, fehlerhaftem Einbau, externen Einflüssen und dergleichen, kann die Qualität der Positionsbestimmung im Laufe der Zeit abnehmen. Das zeigt sich im Extremfall dadurch, dass die Positionsbestimmung irgendwann plötzlich nicht mehr durchgeführt werden kann. Es wird dann von einer sogenannten "Nichterkennung" gesprochen. Je nach Ausführung und Einstellung des FzG, wird dem Fahrzeughalter eine einzelne Nichterkennung oder die Häufung solcher Ereignisse gemeldet. Ist die Positionsbestimmungsvorrichtung Teil eines Gebührenerhebungssystems, dann wird der Fahrzeughalter in der Regel aufgefordert, das FzG zeitnah überprüfen zu lassen.

Um die Genauigkeit und Zuverlässigkeit der Positionsbestimmung zu erhöhen, sind Positionsbestimmungsvorrichtungen bekannt, welche Navigationssignale von Satelliten empfangen und auswerten können, die zu unterschiedlichen GNSS-Systemen gehören. Eine solche Positionsbestimmungsvorrichtung wird beispielsweise in DE 10 2011 106 589 A1 offenbart. Hierbei kann die Positionsbestimmungsvorrichtung entweder die Signale eines der GNSS-Systeme für die Positionsbestimmung nutzen und das andere GNSS-System lediglich im Notfall nutzen, um die Verfügbarkeit der Positionsbestimmung zu verbessern, oder sie kann beide GNSS-Systeme gleichzeitig für die Positionsbestimmung nutzen, um die Positionsauflösung zu erhöhen.

Es ist Aufgabe der Erfindung, ein Verfahren bereitzustellen, mit der eine Fehlfunktion einer Positionsbestimmungsvorrichtung mit hoher Sicherheit aber mit geringem zusätzlichen Materialaufwand erkannt werden kann. Wünschenswert ist es zudem, wenn die Fehlfunktion bereits vor dem Auftreten des völligen Versagens der Positionsbestimmung signalisiert wird. Es ist weiterhin Aufgabe der Erfindung, zu diesem Zweck ein Signalisierungssystem, ein Gebührenerhebungssystem, eine Positionsbestimmungsvorrichtung und ein Computerprogrammprodukt bereitzustellen.

Die Aufgabe wird gemäß der Erfindung durch ein Verfahren mit den Merkmalen des Anspruchs 1, durch ein Signalisierungssystem mit den Merkmalen des Anspruchs 6, durch ein Gebührenerhebungssystem mit den Merkmalen des Anspruchs 10, durch eine Positionsbestimmungsvorrichtung mit den Merkmalen des Anspruchs 11 und durch ein Computerprogrammprodukt mit den Merkmalen des Anspruchs 12 gelöst. Vorteilhafte Weiterbildungen der Erfindung sind in den Unteransprüchen aufgeführt.

Die Erfindung beruht auf der Überlegung, dass unterschiedliche GNSS-Systeme die Berechnung von Positionsdaten erlauben, die zueinander in einem festen Verhältnis stehen. Die Abweichungen zwischen den Positionsdaten unterschiedlicher GNSS-Systeme sind systematisch bedingt. Anders ausgedrückt: Aus den Navigationssignalen eines ersten GNSS-Satellitensystems lässt sich eine erste Position ableiten und aus den Navigationssignalen eines zweiten GNSS-Satellitensystems lässt sich eine zweite Position ableiten. Diese zwei Positionen können miteinander verglichen werden, um die Zuverlässigkeit der auf den Navigationssignalen basierenden Positionsbestimmung zu prüfen. Anstatt die ermittelten Positionen, bestehend aus drei Positionskoordinaten, miteinander zu vergleichen, können hierfür auch Positionswerte herangezogen werden. Bei einem Positionswert kann es sich beispielsweise um eine einzige Raumkoordinate oder um einen Tupel aus zwei oder mehr Raumkoordinaten handeln. Nachfolgend wird daher allgemein von einem Erstpositionswert und einem Zweitpositionswert gesprochen.

Anders ausgedrückt: Der Erstpositionswert kann die genaue Position im Sinne eines eindeutigen Punktes im dreidimensionalen Raum umfassen. Es handelt sich dann um eine mittels Positionsbestimmung ermittelte Position mit drei Raumkoordinaten, also bestehend aus einem Tupel aus drei Raumkoordinaten, beispielsweise kartesischen Koordinaten oder Kugelkoordinaten. Der Erstpositionswert kann aber auch nur aus einem oder zwei solcher Raumkoordinaten bestehen, beispielsweise geographische Länge und geographische Breite. Das gleiche gilt natürlich auch für den Zweitpositionswert. Beispielsweise kann der Erstpositionswert die geographische Breite der Positionsbestimmungsvorrichtung sein, die basierend auf die Erstsignale ermittelt wurde, während der Zweitpositionswert die geographische Breite ist, die basierend auf die Zweitsignale ermittelt wurde. Es kann unter Umständen ausreichen, diese beiden Werte miteinander zu vergleichen, um eine Fehlfunktion oder drohende Fehlfunktion zu erkennen.

Wenn zur Positionsbestimmung Navigationssignale zweier GNSS-Satellitensysteme herangezogen werden, beispielsweise des GPS-Systems und des GLONASS-Systems, dann erhält man üblicherweise zwei unterschiedliche Positionswerte, die situationsabhängig mehr oder weniger voneinander abweichen. Diese beiden Positionswerte müssen in einer Positionsbestimmungsvorrichtung derart weiter verarbeitet werden, dass letztendlich ein einziger Positionswert errechnet wird, welcher die aktuelle Position bzw. den aktuellen Ort der Positionsbestimmungsvorrichtung bzw. des Fahrzeugs kennzeichnet. Dies kann im einfachsten Fall dadurch geschehen, dass nur eine der beiden Positionswerte als "korrekter" Positionswert zur Navigationsunterstützung oder zur Mauterfassung weiter verarbeitet wird. Sollen jedoch beide Positionswerte berücksichtigt werden, so kann beispielsweise eine Art Mittelwertbildung oder gewichtete Mittelwertbildung stattfinden, wobei eine Mittelposition auf einer Verbindungsachse zwischen den beiden Positionswerten ermittelt wird. Alternativ oder kumulativ hierzu kann die aktuelle Fahrzeugposition mittels eines anspruchsvolleren Berechnungsmodells aus den beiden Positionswerten errechnet werden, beispielsweise mittels eines Kalman-Filters auf jeweils mehrere aufeinander folgend abgeleitete Erstpositionswerte und/oder auf jeweils mehrere aufeinander folgend abgeleitete Zweitpositionswerte oder auf jeweils mehrere aufeinander folgend ermittelte Mittelpositionswerte.

In der Positionsbestimmungsvorrichtung dient ein GNSS-Empfänger dazu, GNSS-Signale von Navigationssatelliten zu empfangen. Die empfangenen Signale werden dann analysiert, um die Position des GNSS-Empfängers, und somit die Position der Positionsbestimmungsvorrichtung bzw. des Fahrzeuges zu bestimmen, in oder an dem die Positionsbestimmungsvorrichtung angeordnet ist. Geht man von nur einem GNSS-System aus, dann sind Signale von mindestens vier Satelliten notwendig, um die vollständige Position, also alle drei Raumkoordinaten bzw. Ortskoordinaten der Positionsbestimmungsvorrichtung und die Systemzeit des GNSS-Systems zu errechnen. Wenn andererseits eine Raumkoordinate der Positionsbestimmungsvorrichtung bekannt ist, oder eine Oberfläche bekannt ist, auf der sich die Positionsbestimmungsvorrichtung bewegt, beispielsweise die Meeresoberfläche, wenn sich die Positionsbestimmungsvorrichtung auf einem Schiff befindet, dann reichen Signale dreier Satelliten, um die genaue Position und die Systemzeit zu ermitteln. Unter bestimmten Bedingungen genügen dazu auch die Signale zweier Satelliten.

Die mittels des GNSS-Empfängers empfangenen Navigationssignale des ersten GNSS-Satellitensystems werden nachfolgend Erstsignale genannt. Dementsprechend werden die empfangenen Navigationssignale des zweiten GNSS-Satellitensystems als Zweitsignale bezeichnet. Jeder Satellit des ersten GNSS-Satellitensystems sendet hierbei ein Erstsignal aus. Das bedeutet, dass das Erstsignal aus einem Trägersignal besteht, auf dem die für Positionsbestimmung notwendigen Daten der Navigationsnachricht aufmoduliert sind. Diese Navigationsnachricht wiederholt sich in regelmäßigen Abständen in dem Erstsignal. Um den Erstpositionswert aus den Erstsignalen abzuleiten, müssen die Erstsignale analysiert werden. Dies bedeutet insbesondere, dass die im Trägersignal jedes Erstsignals enthaltene Navigationsnachricht zumindest teilweise mittels einer Demodulation ermittelt werden muss. Ist eine initiale Position hinreichend genau bekannt, können der initialen Positionen folgende Positionen in Sekundenabständen ausgehend von der initialen Positionen auch aus den laufzeitbedingten Phasenverschiebungen der PRN-Codes des jeweiligen Signals bestimmt werden.

Die Erstsignale können hierbei von zwei Satelliten des ersten GNSS-Satellitensystems oder von drei oder mehr solchen Satelliten stammen. Entsprechendes gilt für das Zweitsignal, die von zwei oder von drei oder mehr Satelliten des zweiten GNSS-Satellitensystems stammen können. Dies bedeutet dementsprechend, dass der Erstpositionswert zu einem bestimmten Zeitpunkt aus Erstsignalen abgeleitet sein kann, welche von mindestens zwei Satelliten des ersten GNSS-Satellitensystems stammen. Wird der Erstpositionswert zu einem späteren Zeitpunkt erneut ermittelt, so kann sie aus Erstsignalen abgeleitet sein, welche von anderen Satelliten desselben GNSS-Satellitensystems stammen.

Bei dem ersten und dem zweiten GNSS-Satellitensystem handelt es sich um zwei unterschiedliche GNSS-Satellitensysteme, welche zur Navigationsunterstützung geeignet sind. Bereits etabliert oder in Aufbau befinden sich zurzeit die Systeme Global Positioning System (GPS, auch unter NAVSTAR GPS bekannt), GLONASS, Galileo und Beidou. Andere GNSS-Satellitensysteme können mit einbezogen werden, soweit es möglich ist, aus den von ihnen versendeten Navigationssignalen Positionswerte für die Positionsbestimmungsvorrichtung abzuleiten. Der GNSS-Empfänger ist also ausgebildet, Navigationssignale zweier unterschiedlicher GNSS-Satellitensysteme empfangen zu können. Hierzu weist der GNSS-Empfänger vorzugsweise zwei Empfangsantennen auf, die jeweils für den Frequenzbereich des zugehörigen GNSS-Satellitensystems ausgelegt oder optimiert sind. Bevorzugterweise sind zwei GNSS-Empfänger vorgesehen, die als Teilempfänger zusammen den erfindungsgemäßen GNSS-Empfänger bilden.

Vorzugsweise werden die Erstsignale und die Zweitsignale zeitgleich oder hinreichend zeitgleich durch den GNSS-Empfänger empfangen. Das bedeutet, es handelt sich um Signale, die hinreichend gleichzeitig am GNSS-Empfänger bzw. an dessen Antenne(n) ankommen. Das Maß der hinreichenden Gleichzeitigkeit ist vorzugsweise dann erfüllt, wenn die Erstsignale und die Zweitsignale innerhalb eines Zeitrahmens empfangen wurden, der der Summe der doppelten Dauer eines ersten Datenrahmens eines Erstsignals und der doppelten Dauer eines zweiten Datenrahmens eines Zweitsignals entspricht. Dabei wird unter einem Datenrahmen derjenige Datensatz verstanden, von dem einige bestimmte Datenelemente in einem folgenden Datenrahmen wiederholt werden. Bezüglich den Datenelementen, die inhaltlich dem sendenden Satelliten zuzuordnen sind (Zeitkorrekturwerte, Ephemeriden), besitzen beispielsweise die Datenrahmen des GPS-Systems eine Dauer von 30 Sekunden und die Datenrahmen des Glonass-Systems eine Dauer von 150 Sekunden (das ist jeweils eine sogenannte Seite der Navigationsnachricht), wodurch der Zeitrahmen des hinreichend gleichzeitigen Empfangs auf 6 Minuten festgelegt ist; bezüglich den Datenelementen, die inhaltlich dem GNSS-System als Ganzes zuzuordnen sind (Almanachdaten aller aktiven Satelliten) besitzen beispielsweise die Datenrahmen des GPS-Systems und des Glonass-Systems jeweils eine Dauer von 12,5 Minuten (das ist jeweils die Länge der gesamten Navigationsnachricht (25 Seiten im GPS-System, 5 Seiten im Glonass-System) eines Satelliten des jeweiligen Systems), wodurch der Zeitrahmen des hinreichend gleichzeitigen Empfangs auf 50 Minuten festgelegt ist.

Gemäß einer bevorzugten Ausführungsform umfasst der Erstpositionswert eine, zwei oder drei Raumkoordinaten der Positionsbestimmungsvorrichtung, die aus den Erstsignalen abgeleitet werde(n) und/oder umfasst der Zweitpositionswert eine, zwei oder drei Raumkoordinaten der Positionsbestimmungsvorrichtung (PV), die aus den Zweitsignalen abgeleitet werde(n). Der Erstpositionswert kann also ein Skalar oder ein ein- oder zweidimensionaler Vektor sein. Auch wenn aus den Erstsignalen die Position der Positionsbestimmungsvorrichtung mit allen drei notwendigen Raumkoordinaten ermittelt wird, kann es ausreichend und insbesondere effizienter sein, lediglich eine oder zwei der Raumkoordinaten mit den entsprechenden Raumkoordinaten zu vergleichen, die aus den Zweitsignalen abgeleitet sind. Es kann sich bei dem Erstpositionswert alternativ um einen Parameter handeln, der aus einem, aus zwei oder aus drei Raumkoordinaten der Positionsbestimmungsvorrichtung abgeleitet ist, beispielsweise aus einer Prüfsumme, in deren Berechnung die Raumkoordinaten einfließen. Die gleichen Überlegungen gelten auch für den Zweitpositionswert.

Die abgeleiteten Erst- und Zweitpositionswerte werden erfindungsgemäß ausgewertet. Dies geschieht vorzugsweise, indem der Erstpositionswert und der Zweitpositionswert miteinander verglichen werden, wobei entschieden wird, eine Signalisierung auszulösen, wenn der Erstpositionswert von dem Zweitpositionswert um mehr als eine Schwellendifferenz abweicht. Die Schwellendifferenz kann ein unter anderem von den genutzten GNSS-Satellitensystemen abhängiger Abstand sein. Alternativ kann die Schwellendifferenz von vorausgehend bzw. in der Vergangenheit ermittelten Erstpositionswerten und Zweitpositionswerten abhängen.

Das Auswerten des Erstpositionswerts aus den Erstsignalen kann beispielsweise derart erfolgen, dass die vom (ggf. ersten) GNSS-Empfänger bereitgestellten Ausgabedaten ausgewertet werden. Diese Ausgabedaten umfassen üblicherweise Zeit- und Positionsinformationen, die der GNSS-Empfänger aus den Erstsignalen abgeleitet hat. Insbesondere kann es sich um Ausgabedaten in einem sogenannten NMEA-Format handeln, wobei NMEA die Abkürzung für "National Marine Electronics Association" ist. Hier ist der NMEA-0183-Standard von besonderer Bedeutung, der ein ASCII-Format mit einem seriellen Kommunikationsprotokoll verwendet. Aus diesen Ausgabedaten im NMEA-Format sind die Werte geographische Breite und geographische Länge direkt entnehmbar (beispielsweise aus dem GGA-Datensatz) und können einzeln (skalar) oder gemeinsam (zwei- oder dreidimensionaler Vektor) als Erstpositionswert weiterverwendet werden. Diese gleichen Überlegungen und Ausführungsformen können auch beim Auswerten des Zweitpositionswerts zum Einsatz kommen.

Wie schon erwähnt, werden die Erstsignale und die Zweitsignale vorzugsweise innerhalb eines Zeitrahmens von vorbestimmter Dauer empfangen. In diesem Fall kann von einer Zuordnung der Erstsignale zu den Zweitsignalen gesprochen werden. Dementsprechend sind auch der aus diesen Erstsignalen abgeleitete Erstpositionswert und der aus diesen Zweitsignalen abgeleitete Zweitpositionswert als einander zugeordnet oder zugehörig definiert. Soweit es sich bei den Erst- und Zweitsignalen nicht jeweils um die gesamte Navigationsmitteilung handelt, sondern nur um den PRN-Code des Signals, aus dessen Phasenverschiebung die Pseudoentfernung bestimmt werden soll, kann der Zeitrahmen auch dem Takt der Ausgabe des NMEA-Protokolls aus dem GNSS-Empfänger entsprechen, beispielsweise 0,5 Sekunden oder 1 Sekunde. Im Falle eines plötzlich einsetzenden Spoofings eines ersten GNSS-Systems, macht sich dies in der Regel bereits in den ersten Sekunden durch Positionssprünge des Erstpositionswertes deutlich, bevor die Erstpositionswerte nach mehreren zehn Sekunden oder Minuten dem Zielort des Spoofings entsprechen.

Gemäß einer bevorzugten Ausführungsform ist vorgesehen, dass fortlaufend Erstsignale empfangen und daraus Erstpositionswerte abgeleitet werden und/oder fortlaufend Zweitsignale empfangen und daraus Zweitpositionswerte abgeleitet werden, wobei die Schwellendifferenz aus einem paarweisen Vergleichen der Erstpositionswerte mit zugehörigen Zweitpositionswerten ermittelt wird. Hierbei kann die Schwellendifferenz aus einer Differenz zwischen einem Erstpositionswert und einem Zweitpositionswert abgeleitet sein, oder aus einem Mittelwert der Differenzen zwischen Erstpositionswerten und Zweitpositionswerten über mehrere Messungen, beispielsweise über mindestens zwei oder drei Messungen, oder über die Messungen innerhalb eines bestimmten Zeitraumes, beispielsweise über einen Tag. Wie vorangehend erläutert, gelten ein Erstpositionswert und ein Zweitpositionswert als einander zugehörig, wenn die ihnen zugrunde liegenden Erstsignale und Zweitsignale innerhalb eines Zeitrahmens mit vorgegebener Dauer empfangen wurden.

Das Ergebnis der Auswertung wird anschließend dazu verwendet, eine Entscheidung dahingehend zu treffen, dass eine Signalisierung ausgelöst wird. Es wird signalisiert, dass die Positionsbestimmungsvorrichtung einer Fehlfunktion unterliegt oder dass eine solche Fehlfunktion droht. Die Fehlfunktion kann insbesondere eine mangelnde Betriebsfähigkeit, beispielsweise ein Kalibrierungsfehler, der Positionsbestimmungsvorrichtung sein oder von einer solchen mangelnden Betriebsfähigkeit herrühren. Alternativ kann ein Eingriff in das System in Form eines Störsignals vorliegen. Ein Störsignal, beispielsweise in Form eines Rauschens oder in Form einzelner oder mehrerer frequenzvariabler oder frequenzinvariabler Träger auf einem oder mehreren Betriebsbändern, z.B. auf dem Betriebsband L1 beim GPS, wird als Jamming-Signal bezeichnet. Ein Störsignal in Form eines Täuschungssignals, das den Signalen mehrerer Navigationssatelliten entspricht, jedoch eine falsche Information trägt, die in einem GNSS-Empfänger zur Bestimmung einer anderen Position als der wahren Position führt, wird als Spoofing-Signal bezeichnet.

Vorzugsweise werden die Verfahrensschritte zumindest teilweise in einer Zentraleinrichtung durchgeführt, welche mit der Positionsbestimmungsvorrichtung in Funkverbindung steht. Beispielsweise ist es möglich, dass die abgeleiteten Erstpositionswerte und/oder Zweitpositionswerte an die Zentraleinrichtung übermittelt werden, wo ihre Auswertung erfolgt. Alternativ können auch die empfangenen Erst- und/oder Zweitsignale an die Zentraleinrichtung übermittelt werden, so dass auch die Ableitung der entsprechenden Erstpositionswerte und/oder Zweitpositionswerte zentral erfolgt.

Neben dem beschriebenen Verfahren werden erfindungsgemäß eine Reihe weiterer Komponenten vorgeschlagen, deren Eigenheiten und bevorzugte Ausführungsformen nachfolgend erläutert werden. Dies sind ein Signalisierungssystem, ein Gebührenerhebungssystem, eine Positionsbestimmungsvorrichtung und ein Computerprogrammprodukt. Es wird jedoch darauf hingewiesen, dass vorangehend im Zusammenhang mit dem Verfahren dargelegte Merkmale auch in besonderen Ausführungsformen des Signalisierungssystems, des Gebührenerhebungssystems, der Positionsbestimmungsvorrichtung und des Computerprogrammprodukts zur Anwendung kommen können und dort entsprechende Vorteile entfalten. Dies gilt auch umgekehrt für nachfolgend erläuterte Erzeugnismerkmale, die als Verfahrensmerkmale im erfindungsgemäßen Verfahren entsprechende Vorteile aufweisen.

Das Signalisierungssystem weist die Positionsbestimmungsvorrichtung mit dem GNSS-Empfänger auf. Zudem sind Ermittlungsmittel vorgesehen, welche ausgebildet sind, einen Erstpositionswert aus den Erstsignalen und einen Zweitpositionswert aus den Zweitsignalen abzuleiten. Weiterhin werden in einem Auswertungsmittel der Erstpositionswert und/oder der Zweitpositionswert ausgewertet, vorzugsweise der Erstpositionswert und der Zweitpositionswert miteinander verglichen, und ein Auswerteergebnis erzeugt. In Abhängigkeit vom Auswerteergebnis entscheidet dann ein Entscheidungsmittel über das Auslösen der Signalisierung über eine Fehlfunktion oder eine drohende Fehlfunktion, insbesondere über eine drohende mangelnde Betriebsfähigkeit, der Positionsbestimmungsvorrichtung. Das Signalisierungssystem kann insbesondere Teil eines Gebührenerhebungssystems sein.

Gemäß einer kompakten Ausführungsform ist das Auswertungsmittel oder das Entscheidungsmittel in der Positionsbestimmungsvorrichtung angeordnet. Es können auch sowohl das Auswertungsmittel als auch das Entscheidungsmittel in der Positionsbestimmungsvorrichtung angeordnet sein. Die Auswertung des Erstpositionswerts und/oder des Zweitpositionswerts und/oder das Treffen der Entscheidung aufgrund des Auswerte-Ergebnisses erfolgen in diesem Fall in der Positionsbestimmungsvorrichtung. Dies ist insbesondere dann sinnvoll, wenn die Überwachung der im Straßenverkehr befindlichen Positionsbestimmungsvorrichtungen möglichst dezentral erfolgen soll.

Alternativ kann eines oder können beide abgeleiteten Positionswerte per Funk an eine Zentraleinrichtung des Signalisierungssystems bzw. des Gebührenerhebungssystems übermittelt werden. In diesem Fall weist die Positionsbestimmungsvorrichtung das Ermittlungsmittel und Funkmittel oder eine Funkvorrichtung auf. Das Auswertungsmittel und das Entscheidungsmittel sind dann Teil der Zentraleinrichtung. Die Zentraleinrichtung kann als eine Anordnung aus einem oder mehreren Rechnern ausgebildet sein, welche geographisch verteilt aufgestellt ist. Vorzugsweise kann eine Zentraleinrichtung über Funk mit mehreren Positionsbestimmungsvorrichtungen verbunden sein. Eine solche zentrale Auswertung der/des Positionswerte(s) und darauf basierte Entscheidungsfindung hat den Vorteil, dass der Auswertealgorithmus auch zentral überarbeitet, optimiert und gewartet werden kann. Die Funkvorrichtung kann sich für die Kommunikation zwischen der Positionsbestimmungsvorrichtung und der Zentraleinrichtung eines Mobilfunkprotokolls bedienen, wie beispielsweise dem verbreiteten GSM-Standard (GSM - Global System for Mobile Communications).

Bevorzugterweise weist die Positionsbestimmungsvorrichtung eine Signalisierungsvorrichtung auf und ist ausgebildet, bei positiver Entscheidung des Entscheidungsmittels über das Auslösen der Signalisierung die Signalisierung auszulösen. Die Signalisierungsvorrichtung kann insbesondere Leuchtdioden (LEDs), ein Display und/oder andere optische oder akustische Signalgeber umfassen, welche in der Lage sind, die Signalisierung dem Fahrzeugführer zu vermitteln. Alternativ oder zusätzlich kann die Signalisierungsvorrichtung Funkmittel aufweisen, über die ein Funksignal an eine externe Einrichtung übertragen wird. In diesem Fall gilt das Aussenden des Funksignals als Signalisierung. In der externen Einrichtung kann die Signalisierung dazu führen, dass eine Nachricht an den Fahrzeughalter versandt wird und/oder dass andere notwendige Schritte zur Behebung des Problems der (drohenden) Fehlfunktion eingeleitet werden.

Gemäß einem weiteren Aspekt der Erfindung wird eine Positionsbestimmungsvorrichtung mit einem GNSS-Empfänger vorgeschlagen, welcher ausgebildet ist, Erstsignale eines ersten GNSS-Satellitensystems und Zweitsignale eines zweiten GNSS-Satellitensystems zu empfangen. Insbesondere kann der GNSS-Empfänger zweiteilig ausgebildet sein, mit einem ersten GNSS-Empfänger, welcher für den Empfang von Signalen des ersten GNSS-Satellitensystems ausgelegt ist, und einem zweiten GNSS-Empfänger, welcher für den Empfang von Signalen des zweiten GNSS-Satellitensystems ausgelegt ist. Alternativ kann der GNSS-Empfänger lediglich zwei Antennen aufweisen, welche jeweils für den Empfang von Signalen eines der beiden GNSS-Satellitensysteme ausgelegt sind.

Die Positionsbestimmungsvorrichtung weist zudem Ermittlungsmittel, welche ausgebildet sind, den Erstpositionswert aus den Erstsignalen und den Zweitpositionswert aus den Zweitsignalen abzuleiten, ein Auswertungsmittel, welches ausgebildet ist, aufgrund einer Auswertung, insbesondere eines Vergleichs, der beiden Positionswerte ein Auswerteergebnis zu erzeugen, und ein Entscheidungsmittel auf, welches ausgebildet ist, in Abhängigkeit vom Auswerteergebnis eine Signalisierung auszulösen.

Das vorangehend beschriebene Verfahren kann gänzlich oder in Teilen in einem Computerprogrammprodukt verwirklicht sein, das in einem Speicher und/oder einem Prozessor der Positionsbestimmungsvorrichtung abgelegt ist. Das Computerprogrammprodukt kann auch zumindest teilweise auf der Zentraleinrichtung abgelegt sein, sofern eine solche vorgesehen ist.

Die Erfindung wird im Folgenden anhand von Ausführungsbeispielen unter Bezugnahme auf die Figuren erläutert. Hierbei zeigen:
- Fig. 1: eine schematische Darstellung einer erfindungsgemäßen Positionsbestimmungsvorrichtung;
- Fig. 2: eine schematische Darstellung eines erfindungsgemäßen Signalisierungssystems mit einer Positionsbestimmungsvorrichtung und einer Zentraleinrichtung; und
- Fig. 3: ein Diagramm einer Messreihe ermittelter Erstpositionswerte und Zweitpositionswerte mit zwei auffälligen Messpunkten.

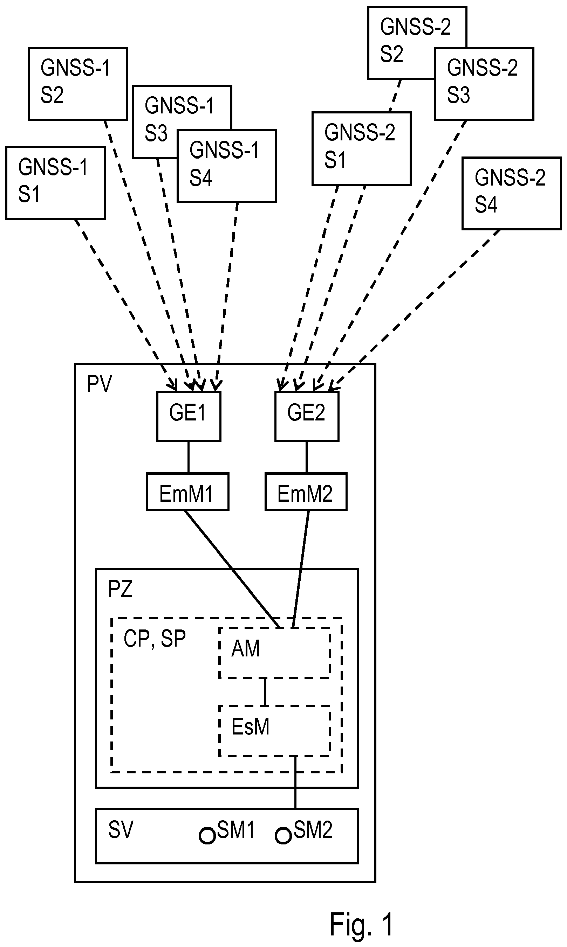

In der Fig. 1 wird eine Positionsbestimmungsvorrichtung PV gemäß einer erfindungsgemäßen Ausführungsform schematisch dargestellt. Die Positionsbestimmungsvorrichtung PV weist einen ersten GNSS-Empfänger GE1 für ein erstes GNSS-Satellitensystem GNSS-1 und einen zweiten GNSS-Empfänger GE2 für ein zweites GNSS-Satellitensystem GNSS-2 auf. Bei dem ersten GNSS-Satellitensystem GNSS-1 handelt es sich beispielsweise um ein GPS-Satellitensystem, so dass der erste GNSS-Empfänger GE1 als GPS-Empfänger ausgebildet ist. Bei dem zweiten GNSS-Satellitensystem GNSS-2 kann es sich dann um ein GLONASS-Satellitensystem handeln, so dass der zweite GNSS-Empfänger GE2 entsprechend als GLONASS-Empfänger ausgebildet sein muss.

Vorliegend wird für den Empfang der Signale aus den beiden GNSS-Satellitensystemen GNSS-1, GNSS-2, nämlich der Erstsignale des ersten GNSS-Satellitensystemens GNSS-1 und der Zweitsignale des zweiten GNSS-Satellitensystemens GNSS-2, jeweils ein eigener GNSS-Empfänger GE1, GE2 bereitgestellt. Die Signale dieser beiden GNSS-Satellitensysteme GNSS-1, GNSS-2 können jedoch auch von einem gemeinsamen GNSS-Empfänger empfangen werden, der für diese Aufgabe mehrere unterschiedliche Antennen und/oder Empfänger-Schaltkreise aufweist. Der GNSS-Empfänger kann auch lediglich mit einer einzigen Empfangsantenne ausgestattet und ausgebildet sein, aus dem mittels der Empfangsantenne empfangenen Gesamtsignal Erstsignale und Zweitsignale auseinander zu filtern. Die beiden GNSS-Empfänger können auch in einem gemeinsamen Gerät untergebracht sein, so dass dann von einem einzelnen GNSS-Empfänger gesprochen wird, der imstande ist, Signale mehrerer GNSS-Satellitensysteme zu empfangen und auszuwerten.

Das erste GNSS-Satellitensystemen GNSS-1 weist mehrere GNSS-Navigationssatelliten GNSS-1 S1, GNSS-1 S2, GNSS-1 S3, GNSS-1 S4 auf, von denen hier vier schematisch Dargestellt sind. Auch das zweite GNSS-Satellitensystem GNSS-2 weist mehrere GNSS-Navigationssatelliten GNSS-2 S1, GNSS-2 S2, GNSS-2 S3, GNSS-2 S4 auf, von denen hier ebenfalls vier schematisch dargestellt sind. Der erste GNSS-Empfänger GE1 weist eine hier nicht dargestellte Empfangsantenne auf und ist ausgebildet, Satellitensignale (als gestrichelte Pfeile veranschaulicht) von den ersten GNSS-Navigationssatelliten GNSS-1 S1, GNSS-1 S2, GNSS-1 S3, GNSS-1 S4 zu empfangen, aus den Satellitensignalen die darin übermittelten Satellitendaten zu extrahieren und diese zu analysieren, um eine aktuelle Position der Positionsbestimmungsvorrichtung PV zu ermitteln bzw. zu errechnen. In entsprechender Weise funktioniert der Empfang von Satellitensignalen (ebenfalls als gestrichelte Pfeile veranschaulicht) der zweiten GNSS-Navigationssatelliten GNSS-2 S1, GNSS-2 S2, GNSS-2 S3, GNSS-2 S4. Wie einleitend erläutert, können auch aus Satellitensignalen nur dreier oder zweier Navigationssatelliten eines GNSS-Satellitensystems unter bestimmten Voraussetzungen Positionsdaten errechnet werden. Deshalb sind in der Fig. 1 für jedes der GNSS-Satellitensysteme GNSS-1, GNSS-2 vier Satelliten schematisch dargestellt, die üblicherweise für eine Positionsbestimmung notwendig sind.

Für das hier beschriebene Verfahren zur Signalisierung einer Fehlfunktion oder drohenden Fehlfunktion der Positionsbestimmungsvorrichtung wird aus den Erstsignalen ein Erstpositionswert extrahiert. Dies erfolgt mittels eines ersten Ermittlungsmittels EmM1, welches in der Fig. 1 als eigenständiges Modul dargestellt ist, in der Regel jedoch Teil des ersten GNSS-Empfängers GE1 sein kann. Entsprechend werden die Zweitsignale der zweiten GNSS-Navigationssatelliten GNSS-2 S1, GNSS-2 S2, GNSS-2 S3, GNSS-2 S4 mittels eines zweiten Ermittlungsmittels EmM2 ausgewertet, um einen Zweitpositionswert abzuleiten.

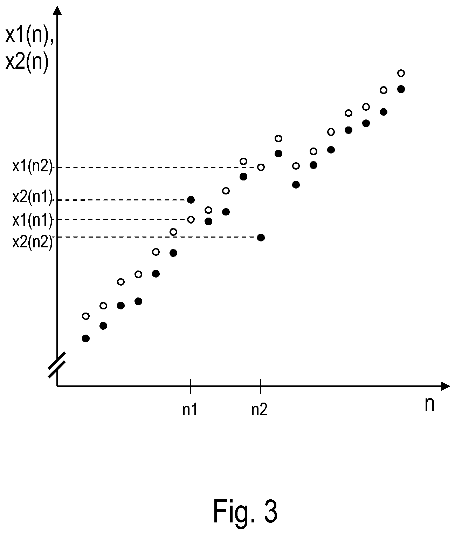

Weiterhin weist die Positionsbestimmungsvorrichtung PV einen Prozessor PZ mit einem Speicher SP auf, in dem ein Computerprogrammprodukt CP hinterlegt ist. Das Computerprogrammprodukt CP befindet sich in dem Speicher SP und wird zeitweise im und vom Prozessor PZ ausgeführt. Deshalb werden sowohl das Computerprogrammprodukt CP als auch der Speicher SP als ein Block im Prozessor PZ gestrichelt dargestellt. Als Teil des Computerprogrammprodukts CP sind im Speicher SP abgelegt bzw. laufen auf dem Prozessor PZ ein Auswertungsmittel AM und ein Entscheidungsmittel EsM. Diese sind ausgebildet, die abgeleiteten Positionswerte auszuwerten und aufgrund eines Ergebnisses der Auswertung zu entscheiden, ob eine Signalisierung ausgelöst wird, oder nicht. Die Signalisierung erfolgt dann, wenn aufgrund der Auswertung festgestellt bzw. ermittelt wurde, dass eine Fehlfunktion der Positionsbestimmungsvorrichtung PV vorliegt oder droht. Ein Beispiel für eine solche Auswertung wird nachfolgend in Zusammenhang mit der Fig. 3 beschrieben.

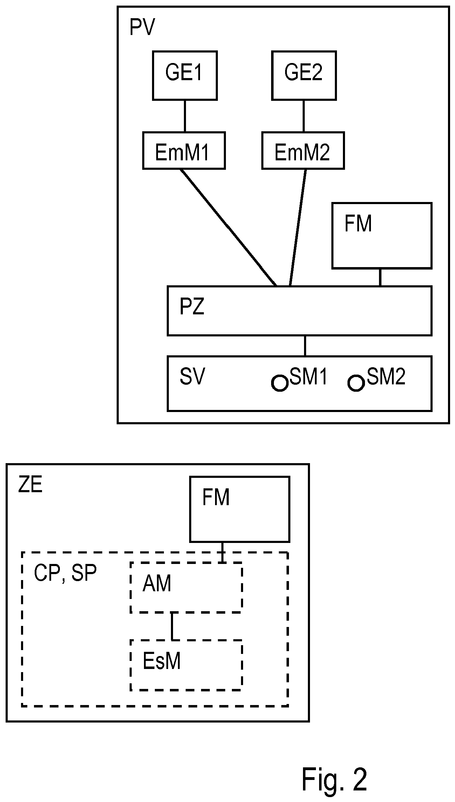

In der Fig. 2 wird eine alternative Ausführungsform der Positionsbestimmungsvorrichtung PV zusammen mit einer Zentraleinrichtung ZE schematisch dargestellt. Während die in Fig. 2 dargestellte Positionsbestimmungsvorrichtung PV weiterhin die GNSS-Empfänger GE1, GE2 und Ermittlungsmittel EmM1, EmM2 aufweist, um die GNSS-Signale zu empfangen und daraus die Positionswerte abzuleiten, sowie einen Prozessor zum Steuern der Komponenten der Positionsbestimmungsvorrichtung PV, sind das Auswertungsmittel AM und das Entscheidungsmittel EsM in Form eines Computerprogrammprodukts CP im Speicher SP der Zentraleinrichtung ZE abgelegt und laufen bzw. wirken dort. Die abgeleiteten Erst- und Zweitpositionswerte werden von der Positionsbestimmungsvorrichtung PV mittels eines Funkmittels FM ausgesendet und mittels eines weiteren Funkmittels FM an der Zentraleinrichtung ZE empfangen.

Über die Funkmittel FM erfolgt auch eine Übermittlung des Ergebnisses der Auswertung des Erstpositionswerts und/oder des Zweitpositionswerts in der Zentraleinrichtung ZE zurück an die Positionsbestimmungsvorrichtung PV. Diese weist neben dem Funkmittel FM auch eine Signalisierungsvorrichtung SV mit Signalmitteln SM1, SM2 auf. Während das erste Signalmittel SM1 ein optischer Signalgeber wie beispielsweise eine LED ist, kann es sich bei dem zweiten Signalmittel SM2 um einen akustischen Signalgeber handeln. Ist das Ergebnis der Auswertung der Positionswerte, dass eine Signalisierung ausgelöst werden muss, dann wird dies mittels der Funkmittel FM von der Zentraleinrichtung ZE an die Positionsbestimmungsvorrichtung PV mitgeteilt und daraufhin mittels der Signalmittel SM1, SM2 dem Benutzer der Positionsbestimmungsvorrichtung PV signalisiert.

Bei dem Benutzer der Positionsbestimmungsvorrichtung PV handelt es sich insbesondere um einen Fahrzeugführer oder Fahrzeughalter eines Fahrzeugs, in dem die Positionsbestimmungsvorrichtung PV als On-Board Unit (OBU) bzw. Fahrzeuggerät (FzG) oder als Teil eines solchen Gerätes installiert ist. Die Positionsbestimmungsvorrichtung PV ist zudem Teil eines Gebührenerhebungssystems. Sie ist ausgebildet, die mittels des GNSS-Empfängers empfangenen Satellitensignale zu empfangen und fortlaufend die Position des Fahrzeuges zu berechnen. Auf Basis der berechneten Positionen kann ermittelt werden, welche gebührenpflichtigen Straßen, Straßenabschnitte, Verkehrsstrukturen etc. durch das Fahrzeug befahren wurden, um dies dem Fahrzeughalter in Rechnung stellen zu können.

Mittels der Signalisierungsvorrichtung SV wird dem Fahrzeugführer oder Fahrzeughalter signalisiert, dass eine Fehlfunktion, insbesondere ein Ausfall oder Störung, der Positionsbestimmungsvorrichtung PV vorliegt oder droht. Die Positionsbestimmungsvorrichtung PV gemäß Fig. 1 ist somit Teil eines erfindungsgemäßen Signalisierungssystems. Ebenso sind die Positionsbestimmungsvorrichtung PV und die Zentraleinrichtung ZE aus der Fig.2 Teil eines erfindungsgemäßen Signalisierungssystems gemäß einer alternativen Ausführungsform. Die in Fig. 2 gezeigte Zentraleinrichtung ZE kann als Teil des Signalisierungssystems mit mehreren Positionsbestimmungsvorrichtungen (nicht dargestellt) in Funkkontakt stehen, die jeweils in einem Fahrzeug angeordnet sind. Auf diese Weise ist es möglich, die Auswertung der Positionswerte für mehrere Positionsbestimmungsvorrichtungen in eine gemeinsame Zentraleinrichtung ZE auszulagern.

Wie vorangehend erläutert, erfolgt eine Auswertung des Erstpositionswerts und des Zweitpositionswerts, um ein Auswerteergebnis zu erhalten, aufgrund dessen dann entschieden wird, dass eine Signalisierung ausgelöst wird. Insbesondere werden der Erstpositionswert und der Zweitpositionswert miteinander verglichen, um eine Positionsdifferenz zu ermitteln. Wenn diese Positionsdifferenz eine Schwellendifferenz übersteigt, dann bedeutet dies, dass eine Fehlfunktion vorliegt oder in naher Zukunft droht. In diesem Fall wird eine Signalisierung ausgelöst. Beispielsweise kann die Überschreitung der Schwellendifferenz nur kurzzeitig, d.h. über einige wenige Minuten oder Stunden vorliegen, danach aber nicht mehr. Dieses Verhalten kann möglicherweise ein Vorbote eines technischen Defektes sein und sollte untersucht werden. Andererseits kann es sein, dass ein Spoofing-Signal kurzzeitig ein- und wieder ausgeschaltet wurde, was als Fehlfunktion in dem Sinne interpretiert werden kann, als der GNSS-Empfänger zumindest aus Signalen eines der GNSS-Systems nicht die korrekte Position ableiten kann.

Vorzugsweise werden fortlaufend aus Erst- und Zweitsignalen Erstpositionswerte und Zweitpositionswerte ermittelt. Aus einer solchen Folge an Erstpositionswerten und den Zweitpositionswerten kann dann eine Regeldifferenz ermittelt werden, die zumindest teilweise auf systembedingten Unterschieden zwischen den beiden GNSS basieren kann. Ist eine solche Regeldifferenz ermittelt oder vorgegeben bzw. vorbekannt, dann kann das Auswertungsmittel AM die fortlaufenden Positionswerte beobachten, um Ausreißer-Paare zu erkennen. Hierbei handelt es sich insbesondere um Paare von Erstpositionswerten und Zweitpositionswerten, die um mehr als die aus der Regeldifferenz abgeleitete Schwellendifferenz voneinander abweichen, oder deren Positionsdifferenz ein anderes Vorzeichen aufweist. Handelt es sich bei den Positionswerten um Vektoren, also insbesondere um zwei- oder dreidimensionale Vektoren, dann kann die Positionsdifferenz ebenfalls ein Vektor sein. Die Auswertung ist dann entsprechend komplizierter. Alternativ kann auch bei vektoriellen Positionswerten die Positionsdifferenz ein skalarer Wert sein, der den Abstand der beiden Positionswerte wiedergibt.

Dies soll nachfolgend anhand einer beispielhaften, fiktiven Messreihe oder Folge von Erstpositionswerten und Zweitpositionswerten veranschaulicht werden, die in der Fig. 3 dargestellt ist. Die ermittelten paarweisen Positionswerte sind in einem Diagramm aufgetragen. Entlang der Abszisse ist eine laufende Nummer n eingetragen, welche die Messpunkte der Messreihe fortlaufend markiert, und somit jedes Positionswert-Paar individuell kennzeichnet. Jedes Messereignis, bei dem ein Erstpositionswert und zeitgleich Zweitpositionswert ermittelt werden, wird also mit einer individuellen Nummer n markiert. Zu jeder laufenden Nummer n entlang der Abszisse gehören somit zwei Positionswerte, nämlich der Erstpositionswert, der aus den Erstsignalen des ersten GNSS-Satellitensystems ermittelt wurde, und der Zweitpositionswert, der aus den Zweitsignalen des zweiten GNSS-Satellitensystems ermittelt wurde. Bei dem Erstpositionswert kann es sich beispielsweise um eine aus den Ausgabedaten eines GPS-Empfängers entnehmbare zweidimensionale Positionsangabe mit geographischer Breite und geographischer Länge handeln. Handelsübliche GPS-Empfänger geben ihre Ergebnisse im NMEA-Format aus, welche die geographische Breite und die geographische Länge enthalten. Entsprechendes gilt für die Ableitung des Zweitpositionswerts.

Entlang der Ordinate sind die ermittelten Erstpositionswerte (x1 (n), offene Kreise) und Zweitpositionswerte (x2(n), gefüllte Kreise) aufgetragen. Hier sind die ermittelten Positionswerte skalare Werte. Hierbei kann es sich insbesondere jeweils um eine Raumdimension der Position der Positionsbestimmungsvorrichtung im Raum handeln, welcher mittels Auswertung der GNSS-Signale ermittelt wurde. Wie aus der Fig. 3 ersichtlich, unterscheiden sich die Erstpositionswerte und Zweitpositionswerte bei den meisten Messereignissen um etwa den gleichen Betrag. In anderen Worten, weichen die beiden Positionswerte x1, x2 um einen Differenzwert voneinander ab, welcher sich nur wenig ändert. Im Normalbetrieb können beide Messergebnisse zur Ermittlung der Position der Positionsbestimmungsvorrichtung genutzt werden, beispielsweise mithilfe eines Kalman-Filters.

Wenngleich die Fig. 3 keine Einheit für die Ordinate angibt, liegt dieser Differenzwert in der Regel im Bereich von wenigen Zentimetern. Dieser übliche Differenzwert oder Regeldifferenz kann als Grundlage für die Bestimmung der oben erwähnten Schwellendifferenz genommen werden, bei dessen Überschreitung eine Signalisierung ausgelöst wird. Beispielsweise kann die Schwellendifferenz als Produkt eines Faktors größer als eins mit einer Regeldifferenz errechnet und gegebenenfalls regelmäßig aktualisiert werden, die dem Mittelwert einer vorgegebenen Anzahl von Differenzen zwischen der Erstpositionswert und dem Zweitpositionswert zu verschiedenen Zeiten entsprechen.

Es gibt zwei Ausreißer in der in Fig. 3 dargestellten Folge: Während die Erstpositionswerte x1(n1) üblicherweise größer sind, als die Zweitpositionswerte x2(n1), ist dieses Verhältnis beim Messereignis mit der laufenden Nummer n1 umgekehrt. Dies kann als Hinweis darauf gesehen werden, dass eine Fehlfunktion vorliegt oder droht. Ein anderes in Fig. 3 gezeigtes Beispiel zeigt das Messereignis mit der laufenden Nummer n2. Dort macht die Differenz zwischen dem Erstpositionswert x1(n2) und dem Zweitpositionswert x2(n2) einen Sprung. Wenn diese Differenz größer ist, als eine Schwellendifferenz, dann kann auch das ein Hinweis für eine vorliegende oder drohende Fehlfunktion der Positionsbestimmungsvorrichtung PV sein. In jedem der beiden Fälle n1, n2 kann eine entsprechende Signalisierung ausgelöst werden.

### Bezugszeichenliste:

- AM: Auswertungsmittel
- CP: Computerprogrammprodukt
- EmM1: erstes Ermittlungsmittel
- EmM2: zweites Ermittlungsmittel
- EsM: Entscheidungsmittel
- FM: Funkmittel
- GE1: GNSS-Empfänger für erstes GNSS-Satellitensystem
- GE2: GNSS-Empfänger für zweites GNSS-Satellitensystem
- PV: Positionsbestimmungsvorrichtung
- PZ: Prozessor
- SM1: erstes Signalmittel
- SM2: zweites Signalmittel

- GNSS-1 S1, GNSS-1 S2, GNSS-1 S3, GNSS-1 S4,: Navigationssatelliten des ersten GNSS-Satellitensystems

- GNSS-2 S1, GNSS-2 S2, GNSS-2 S3, GNSS-2 S4,: Navigationssatelliten des zweiten GNSS-Satellitensystems

- SP: Speicher
- SV: Signalisierungsvorrichtung
- ZE: Zentraleinrichtung

## Patentansprüche

1. Verfahren zur Signalisierung einer Fehlfunktion oder drohenden Fehlfunktion einer mit zumindest einem GNSS-Empfänger (GE1, GE2) versehenen Positionsbestimmungsvorrichtung (PV), **gekennzeichnet durch** folgende Verfahrensschritte:
- Empfangen von zumindest zwei Erstsignalen zweier Satelliten eines ersten GNSS-Satellitensystems und Ableiten eines Erstpositionswerts aus den Erstsignalen;
- Empfangen von zumindest zwei Zweitsignalen zweier Satelliten eines zweiten GNSS-Satellitensystems und Ableiten eines Zweitpositionswerts aus den Zweitsignalen;
- Auswerten des Erstpositionswerts und des Zweitpositionswerts; und
- Entscheiden, dass eine Signalisierung ausgelöst wird, in Abhängigkeit vom Ergebnis des Auswertens.

2. Verfahren nach Anspruch 1, **dadurch gekennzeichnet, dass** der Erstpositionswert eine, zwei oder drei Raumkoordinaten der Positionsbestimmungsvorrichtung (PV) umfasst, die aus den Erstsignalen abgeleitet werde(n) und/oder dass der Zweitpositionswert eine, zwei oder drei Raumkoordinaten der Positionsbestimmungsvorrichtung (PV) umfasst, die aus den Zweitsignalen abgeleitet werde(n).

3. Verfahren nach einem der vorangehenden Ansprüche, **dadurch gekennzeichnet, dass** das Auswerten des Erstpositionswertes und/oder des Zweitpositionswertes ein Vergleichen des Erstpositionswertes und des Zweitpositionswertes umfasst, wobei entschieden wird, eine Signalisierung auszulösen, wenn der Erstpositionswert von dem Zweitpositionswert um mehr als eine Schwellendifferenz abweicht.

4. Verfahren nach Anspruch 3, **dadurch gekennzeichnet, dass** fortlaufend Erstsignale empfangen und daraus Erstpositionswerte abgeleitet werden und/oder fortlaufend Zweitsignale empfangen und daraus Zweitpositionswerte abgeleitet werden, wobei die Schwellendifferenz aus einem paarweisen Vergleichen der Erstpositionswerte mit zugehörigen Zweitpositionswerten ermittelt wird.

5. Verfahren nach einem der vorangehenden Ansprüche, **dadurch gekennzeichnet, dass** die Verfahrensschritte zumindest teilweise in einer Zentraleinrichtung (ZE) durchgeführt werden, welche mit der Positionsbestimmungsvorrichtung (PV) in Funkverbindung steht.

6. Signalisierungssystem zur Signalisierung einer Fehlfunktion oder drohenden Fehlfunktion einer mit zumindest einem GNSS-Empfänger (GE1, GE2) versehenen Positionsbestimmungsvorrichtung (PV), aufweisend:
- die Positionsbestimmungsvorrichtung (PV) mit dem GNSS-Empfänger (GE), welcher ausgebildet ist, zumindest zwei Erstsignale zweier Satelliten eines ersten GNSS-Satellitensystems und zumindest zwei Zweitsignale zweier Satelliten eines zweiten GNSS-Satellitensystems zu empfangen,
- Ermittlungsmittel (EmM1, EmM2), welche ausgebildet sind, einen Erstpositionswert aus den Erstsignalen und einen Zweitpositionswert aus den Zweitsignalen abzuleiten,
- ein Auswertungsmittel (AM), welches ausgebildet ist, den Erstpositionswert und den Zweitpositionswert auszuwerten und ein Auswerteergebnis zu erzeugen, und
- ein Entscheidungsmittel (EsM), welches ausgebildet ist, in Abhängigkeit vom Auswerteergebnis über das Auslösen einer Signalisierung zu entscheiden.

7. Signalisierungssystem nach Anspruch 6, **dadurch gekennzeichnet, dass** das Auswertungsmittel (AM) und/oder das Entscheidungsmittel (EsM) in der Positionsbestimmungsvorrichtung (PV) angeordnet sind/ist.

8. Signalisierungssystem nach Anspruch 6, **dadurch gekennzeichnet, dass** die Positionsbestimmungsvorrichtung (PV) die Ermittlungsmittel (EmM1, EmM2) und eine Funkvorrichtung aufweist, welche ausgebildet ist, den Erstpositionswert und/oder den Zweitpositionswert per Funk an eine Zentraleinrichtung (ZE) zu übermitteln, wobei die Zentraleinrichtung (ZE) das Auswertungsmittel (AM) und das Entscheidungsmittel (EsM) aufweist.

9. Signalisierungssystem nach einem der Ansprüche 6 bis 8, **dadurch gekennzeichnet, dass** die Positionsbestimmungsvorrichtung (PV) eine Signalisierungsvorrichtung (SV) aufweist und ausgebildet ist, bei positiver Entscheidung des Entscheidungsmittels (EsM) über das Auslösen der Signalisierung, die Signalisierung auszulösen.

10. Gebührenerhebungssystem mit einem Signalisierungssystem gemäß einem der Ansprüche 6 bis 9.

11. Positionsbestimmungsvorrichtung mit einem GNSS-Empfänger (GE), welcher ausgebildet ist, zumindest zwei Erstsignale zweier Satelliten eines ersten GNSS-Satellitensystems und zumindest zwei Zweitsignale zweier Satelliten eines zweiten GNSS-Satellitensystems zu empfangen, Ermittlungsmitteln (EmM1, EmM2), welche ausgebildet sind, einen Erstpositionswert aus den Erstsignalen und einen Zweitpositionswert aus den Zweitsignalen abzuleiten, einem Auswertungsmittel, welches ausgebildet ist, den Erstpositionswert und den Zweitpositionswert auszuwerten und ein Auswerteergebnis zu erzeugen, und einem Entscheidungsmittel (EsM), welches ausgebildet ist, in Abhängigkeit vom Auswerteergebnis eine Signalisierung auszulösen.

12. Computerprogrammprodukt (CP) zur Signalisierung einer Fehlfunktion oder drohenden Fehlfunktion einer mit zumindest einem GNSS-Empfänger (GE1, GE2) versehenen Positionsbestimmungsvorrichtung (PV), welches Mittel zur Ausführung wenigstens folgender Anweisung enthält oder verwendet:
- Auswerten eines aus zumindest zwei Erstsignalen zweier Satelliten eines ersten GNSS-Satellitensystems abgeleiteten Erstpositionswerts und eines aus zumindest zwei Zweitsignalen zweier Satelliten eines zweiten GNSS-Satellitensystems abgeleiteten Zweitpositionswerts; und
- Entscheiden, dass eine Signalisierung ausgelöst wird, in Abhängigkeit vom Ergebnis des Auswertens.
